# EUROPÄISCHE PATENTSCHRIFT

(11) **EP 1 536 937 B1**
(45) Veröffentlichungstag und Bekanntmachung des Hinweises auf die Patenterteilung: **02.08.2006**
(21) Anmeldenummer: 03793734.9
(22) Anmeldetag: 14.08.2003
(51) Int. Cl.: B29C 47/34, B29C 47/90

(54) **VERFAHREN UND VORRICHTUNG ZUM ABZIEHEN VON EXTRUSIONSPRODUKTEN, INSBESONDERE AUSRICHTEN DES RAUPENABZUGS AUF DIE EXTRUSIONSACHSE**
METHOD AND DEVICE FOR TAKING OFF EXTRUSION PRODUCTS, IN PARTICULAR FOR ALIGNING THE CATERPILLAR TAKE-OFF UNIT WITH THE EXTRUSION AXIS
PROCEDE ET DISPOSITIF DE TIRAGE DE PRODUITS D'EXTRUSION, EN PARTICULIER AVEC ALIGNEMENT DE LA TIREUSE A CHENILLES SUR L'AXE D'EXTRUSION

(30) Priorität: 04.09.2002 DE 10240718
(43) Veröffentlichungstag der Anmeldung: 08.06.2005
(60) Teilanmeldung: 06112455.8
(73) Patentinhaber: Krauss-Maffei Kunststofftechnik GmbH, 80997 München (DE)
(72) Erfinder: STIEGLITZ, Henning, 81247 München (DE); LABERER, Roman, 85247 Oberroth (DE); JOVERS, Stefan, 84478 Waldkraiburg (DE); WEINMANN, Andreas, 66440 Blieskastel (DE); FORSCH, Karl-Heinz, 66440 Blieskartel-Breitfurt (DE); BASTON, Karl-Heinz, 66497 Contwig (DE)
(74) Vertreter: Harrasz, Julia Konstanze
(86) Internationale Anmeldenummer: PCT/EP2003/009022
(87) Internationale Veröffentlichungsnummer: WO 2004/022310

(56) Entgegenhaltungen:
- FR-A- 2 542 251
- GB-A- 2 348 164
- US-A- 4 041 119

## Beschreibung

Die Erfindung betrifft ein Verfahren bzw. eine Vorrichtung zum Abziehen von Extrusionsprodukten gemäß dem Oberbegriff des Anspruchs 1 bzw. des Anspruchs 6.

Bei der Produktion von Extrusionsprodukten, zu denen auch Kunststoffrohre zählen, wird der aus einem Extruder austretende, thermoplastische Schmelzestrang in einem Formwerkzeug geformt, danach unter Formzwang abgekühlt und kalibriert. Abzugsvorrichtungen, die in der Extrusionslinie hinter den Kalibrier- und Kühlvorrichtungen angeordnet sind, sorgen dafür, dass der aus dem Extruder austretende Schmelzestrang durch die zwischenliegenden Vorrichtungen gefördert wird. Hierzu wird der zu einem Extrusionsprodukt geformte, kalibrierte Schmelzestrang, der nach dem Abkühlen eine ausreichende Festigkeit aufweist, von dem Abzug erfasst und ruckfrei und mit gleichmäßiger Geschwindigkeit bzw. genau geregeltem Geschwindigkeitsverlauf durch die zwischenliegenden Vorrichtungen gezogen. Je größer die in diesen Vorrichtungen auftretenden Reibkräfte sind, desto größer muss die Abzugskraft der Anlage sein. Gleichzeitig muss die Abzugskraft aber auch auf die Größe bzw. den Querschnitt, den Typ und die Wanddicke des zu fördernden Extrusionsproduktes eingestellt sein.

Zu den gängigsten Abzügen gehören die sogenannten Raupenabzüge, die z.B. in DE 33 05 175 sowie der FR 2 542 251 beschrieben werden. Die notwendige Abzugskraft wird hier mit Hilfe von umlaufenden mit Gummistollen besetzten Förderketten, den sogenannten Raupenketten, deren Förderfläche parallel zum zu fördernden Extrusionsprodukt verläuft, in das Rohr eingeleitet. Die Gummistollen sollten möglichst abriebfest sein und dennoch eine gute Haftung der Raupenketten auf der Oberfläche des Extrusionsprodukts haben. Damit eine ungleichmäßige Abnützung der Raupenketten und ein unerwünschtes Verdrehen des Extrusionsprodukts im Abzug vermieden werden kann, müssen die Raupenketten möglichst symmetrisch an dem Extrusionsprodukt angreifen. Für den Fall der Rohrextrusion sind die Raupen also zylindersymmetrisch zu einer Längsachse des Raupenabzugs, die mit der Symmetrieachse des geförderten Rohres übereinstimmen muss, anzubringen, um ein unerwünschtes Verdrehen oder eine ungleichmäßige Belastung des Rohres zu vermeiden.

Bei für die Rohrextrusion verwendeten Raupenabzügen ist es bekannt, abhängig vom Rohrdurchmesser beispielsweise vier Raupenketten vorzusehen, die gegeneinander in X-Stellung um eine Längsachse des Abzugs angeordnet sind. Um die auf das Rohr wirkende Belastung möglichst gering zu halten, muss das Rohr zentrisch in den Abzug einlaufen, d. h. die Symmetrieachse des Rohres muss mit der Längsachse des Abzugs übereinstimmen. Hierzu sind die unteren Raupen über mechanische Verstelleinrichtungen jeweils entlang der Schenkel des X verfahrbar, während die oberen Raupen mit Pneumatikzylindern an das Rohr angepresst werden, deren Wirkrichtung ebenfalls entlang der Schenkel des X liegt. Der in dem Pneumatikzylindern wirkende Druck ist frei einstellbar und muss an die Dimension und die Wandstärke der Rohre angepasst werden. Bei der Produktion von Rohren mit sehr geringen Wandstärken kann es notwendig sein, die Pneumatikzylinder mit einem sogenannten Gegendruck zu beaufschlagen, der gegen die auf die oberen Raupenketten wirkende Schwerkraft arbeitet, eine ausreichende Kraftübertragung von Raupenketten gewährleistet und eine Beschädigung des Extrusionsprodukts verhindert.

Nachteilig an den bekannten Raupenabzügen ist, dass der Raupenabzug bei einen Produktionswechsel mit einer Durchmesseränderung des extrudierten Produktes manuell neu eingestellt werden muss, da ansonsten die Symmetrieachse des Extrudats nicht länger mit der Längsachse der Abzugsvorrichtung übereinstimmt. Hierzu muss die gesamte Extrusionslinie angehalten werden und es kommt zu Produktionsausfällen.

Aufgabe der vorliegenden Erfindung ist es, ein Verfahren und eine Vorrichtung zum Abziehen von Extrusionsprodukten bereit zustellen, die eine Querschnittsänderung des Extrusionsproduktes erkennt und die Lage der Raupenketten automatisch so einstellt, dass die Symmetrieachse des Extrusionsproduktes mit der Längsachse der Abzugsvorrichtung übereinstimmt.

Diese Aufgabe wird durch ein Verfahren gemäß den Merkmalen des Anspruchs 1 und eine Vorrichtung gemäß den Merkmalen des Anspruchs 6 gelöst.

Entsprechend der vorliegenden Erfindung erkennt der Abzug selbsttätig Änderungen im Querschnitt des Extrusionsproduktes die durch einen Produktionswechsel hervorgerufen werden und leitet sofort automatisch Schritte ein, um die Position der Raupenketten so zu korrigieren, dass das Extrusionsprodukt weiterhin zentrisch in die Abzugsvorrichtung einläuft. Diese Durchmesser- bzw. Querschnittanpassung erfolgt während des Betriebs der Anlage, so dass ein separates Abstellen und Anfahren nicht mehr erforderlich ist, und damit auch eine dadurch hervorgerufene unkontrollierte Veränderung der Prozessparameter vermieden wird. Der erfindungsgemäße Abzug ermöglicht es dem Bediener, sehr kurze Umrüstzeiten zu erreichen.

Von der Anlagensteuerung der Extrusionslinie wird dem Abzug lediglich die erwünschte Liniengeschwindigkeit und der anzuwendende Anpress- bzw. Gegendruck, der von den Raupenketten in das Extrusionsprodukt eingebracht werden soll, mitgeteilt. Neben der voll automatischen Anpassung an den veränderten Querschnitt kann die Anpassung auch manuell am Abzug vorgenommen werden, wie es bereits bekannt ist.

In einem besonders bevorzugten Verfahren wird die Änderung des Querschnitts des Extrusionsproduktes anhand der Auslenkung der Raupenketten aus ihrer ursprünglichen Lage gemessen, und auf diese, in Abhängigkeit von der festgestellten absoluten Größe, dadurch reagiert, dass die Abstände der einzelnen Raupenabzüge von der Längsachse der Abzugsvorrichtung automatisch so eingestellt werden, dass das Extrusionsprodukt wieder zentrisch durch diese läuft und alle Krafteinleitungen möglichst symmetrisch erfolgten.

Hierbei ist es möglich, nur die Auslenkung von Raupenketten, die oberhalb einer durch die Horizontale und die Längsachse der Abzugsvorrichtung definierten Ebene angeordnet sind, zu messen und in Anhängigkeit von der dort festgestellten Auslenkung, die unterhalb bzw. in dieser Ebene liegenden Raupenketten derart zu verfahren, dass sich wieder eine symmetrische Anordnung der Raupenketten um das Extrusionsprodukt und die Längsachse ergibt.

In einer besonders bevorzugten Verfahrensweise werden die oben liegenden Raupenketten mit regelbaren, elastischen Mitteln gegen das Extrusionsprodukt gedrückt, wodurch ein gleichmäßiger Druck an allen Raupenketten aufgebaut werden kann. Dieser Anpressdruck wird von der Anlagensteuerung der Extrusionslinie in Abhängigkeit von Material und Dimension vorgegeben.

Gemäß einer weiteren bevorzugten Verfahrensweise wird die gemessene Auslenkung direkt einer Steuerung zugeführt, die hieraus die notwendige Abstandsänderung errechnet und diese veranlasst. Mit Hilfe dieser Steuerung kann auch gleichzeitig der Anpressdruck geregelt werden.

Dieses Verfahren lässt sich bevorzugt mit einem Raupenabzug durchführen, bei dem die mindestens zwei Raupenketten symmetrisch zu einer Längsachse des Raupenabzugs angeordnet werden können und an das Extrusionsprodukt anpressbar sind. Gemäß den bekannten Raupenabzügen sollen die Raupenketten zumindest während des Betriebs, d. h. im Förderzustand mit eingezogenem Extrusionsprodukt symmetrisch zu einer Längsachse des Raupenabzugs angeordnet werden können und eine Anpresskraft auf das Extrusionsprodukt ausüben, die die Kraftübertragung zwischen Raupenketten und Extrusionsprodukt verbessert. Bei sehr kleinen Querschnitten oder dünnen Wandstärken des Extrusionsproduktes kann der Anpressdruck, der bereits durch Schwerkraft der oberhalb des Extrusionsproduktes angeordneten Raupenketten wirkt, auch durch Aufbringen eines Gegendrucks verringert werden, um so eine Beschädigung des Extrusionsproduktes zu vermeiden. Hierbei muss nach wie vor aber eine ausreichende Abzugskraft übertragen werden, um das Extrusionsprodukt durch die zwischen Extruder und Abzug liegenden Vorrichtungen befördern zu können.

Erfindungsgemäß sind Mittel vorgesehen, die es ermöglichen, die durch Querschnittsveränderungen des Extrusionsproduktes hervorgerufenen Auslenkungen von Raupenketten im wesentlichen orthogonal zu der Abzugslängsachse zu messen.

Zum Erzeugen des Anpress- bzw. Gegendrucks auf die Raupenketten können Kolbenzylindereinheiten vorgesehen sein, die mit einem voreingestellten Druck beaufschlagbar sind und deren Kolbenstangen orthogonal zu der Längsachse des Raupenabzugs verfahrbar sind, wobei ihre Wirklinien sich auf der Längsachse schneiden. Besonders bevorzugt ist es, nur die Raupenketten, die oberhalb einer durch die Horizontale und die Längsachse der Abzugsvorrichtung definierten Ebene angeordnet sind, mittels der Kolbenzylindereinheiten elastisch und regelbar zu lagern, während die unterhalb bzw. in dieser Ebene gelegenen Raupenketten mechanisch verfahrbar und ansteuerbar ausgeführt sind.

Es hat sich bewährt, automatisch regelbare Kolbenzylindereinheiten zu verwenden, denen nur der erwünschte und zu haltende Druck vorgegeben werden muss. Besonders bevorzugt werden hierfür Pneumatikzylinder eingesetzt.

Zum mechanischen Ändern des Abstandes zwischen den nicht mit den Kolbenzylindereinheiten gekoppelten Raupenketten und der Längsachse der Einheit sollte mindestens ein Motor vorgesehen sein. Da alle Raupenketten den gleichen Abstand von der fest definierten Längsachse haben sollen, es sich also um eine symmetrische Abstandsänderung handelt, ist es ausreichend, nur einen Motor vorzusehen, der über ein Getriebe mit den in oder unterhalb der horizontalen Ebene liegenden Raupenketten gekoppelt ist.

Zum Messen der Auslenkung der Raupenketten in Reaktion auf eine erfolgte Durchmesser- bzw. Querschnittsänderung des Extrusionsproduktes werden bevorzugt Weggeber verwendet. Es kann aber auch mindestens ein Winkelgeber zum Einsatz kommen. Dieser Winkelgeber wird am Getriebe bzw. an der Welle des Motors angebracht und erlaubt es, die Position der inner- oder unterhalb der horizontalen Ebene liegenden Raupenketten entlang der Verbindungslinien zu der Längsachse exakt zu verfahren.

An den Kolbenzylindereinheiten sind zweckmäßig Weggeber vorgesehen, mit denen die Auslenkung der an diesen elastisch gelagerten Raupenketten durch ein Extrusionsprodukt mit einem veränderten Querschnitt gemessen und einer Steuerung des Raupenabzugs zugeführt werden kann. Die Steuerung errechnet aus der gemessenen Auslenkung die notwendige Abstandsänderung zwischen den in bzw. unterhalb der horizontalen Ebene gelegenen Raupenketten und der Längsachse des Abzugs und verfährt die Raupenketten entsprechend. Die oberhalb der Ebene liegenden Raupenketten werden bei einer Lageänderung der in bzw. unterhalb der Ebene liegenden Raupenketten aufgrund der auf sie wirkenden Anpresskraft ebenfalls entlang der Verbindungslinie zu der Längsachse und orthogonal zu dieser bewegt, so dass alle Raupenketten wieder symmetrisch um diese Längsachse angeordnet sind.

Zusätzlich zur voll automatischen Erkennung einer Querschnittsänderung und der darauf folgenden Einstellung und Nachjustierung der relativen Lage der Raupenketten, sollte es nach wie vor möglich sein, den erfindungsgemäßen Raupenabzug manuell einzustellen, wie dies z. B. bei einer vollständigen Umstellung der Produktionsparameter einer Extrusionslinie notwendig wird.

Anhand der folgenden Zeichnungen soll die Funktionsweise einer erfindungsgemäßen Vorrichtung bzw. eines erfindungsgemäßen Verfahrens zum Abziehen von Rohren noch einmal exemplarisch dargestellt werden. Es zeigen:
- Fig. 1:: Eine Rohrextrusionslinie mit einem erfindungsgemäßen Raupenabzug,
- Fig. 2:: eine schematische Schnittdarstellung eines erfindungsgemäßen Raupenabzugs mit einem Rohr eines ersten Durchmessers,
- Fig. 3:: die Raupenabzugsvorrichtung der Fig. 2 direkt nach einem Dimensionswechsel, und
- Fig. 4:: die Raupenabzugsvorrichtung der Fig. 3 im wiedereingeregelten Zustand.

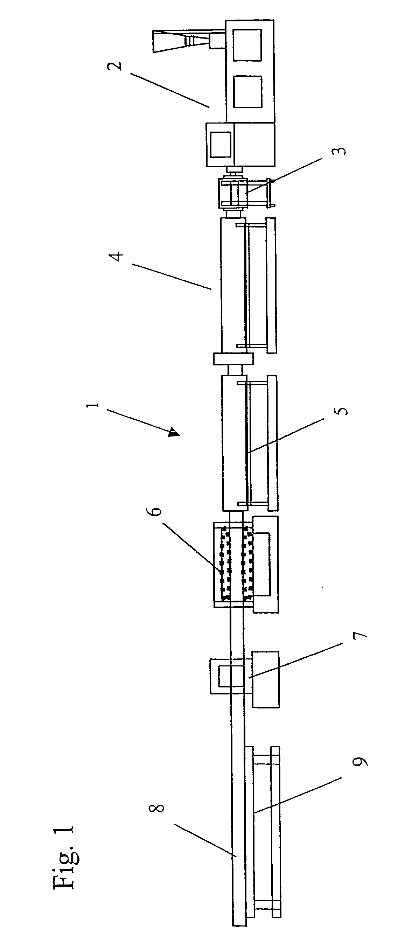

Die Fig. 1 zeigt eine Extrusionslinie 1 zur Herstellung von Kunststoffrohren. Auf einen Extruder 2 folgt ein Rohrwerkzeug 3, hinter dem ein Vakuumtank 4 zum Kalibrieren des extrudierten Schmelzeschlauchs angeordnet ist. Hieran schließt sich eine Kühlvorrichtung 5 an, die die Rohre 8 so weit abkühlen muss, dass sie für die nachfolgend in dem erfindungsgemäßen Raupenabzug 6 auftretenden Beanspruchungen ausreichend formstabil sind. Dieser Raupenabzug 6 bringt in das Rohr 8 eine Abzugskraft ein, die größer sein muss als die zuvor in der Linie auftretenden Reibkräfte, die vor allem im Kalibrator, an Vorrichtungsübergängen und Dichtungen auftreten.

Auf den Abzug 6 folgt eine Trenneinrichtung 7, die die Rohre 8 auf Passlänge schneidet und eine Ablegeeinheit 9.

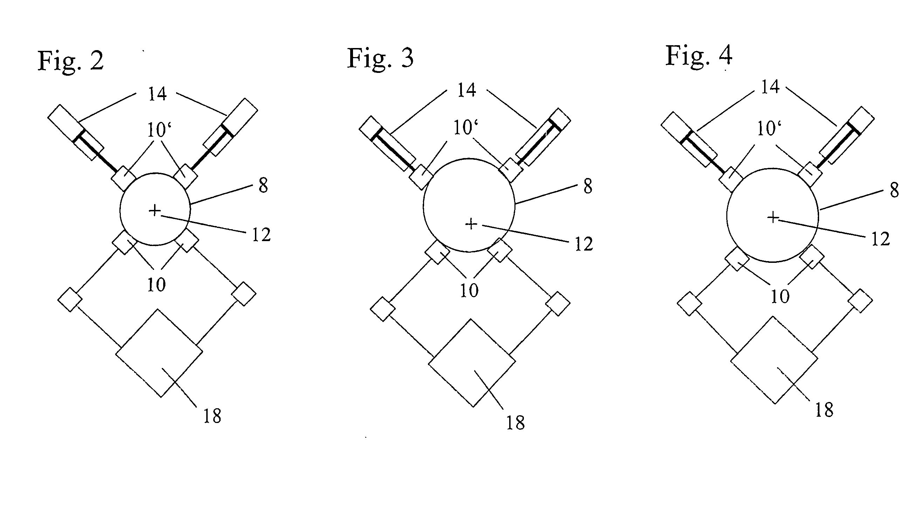

In Fig. 2 ist stark vereinfachend ein schematischer Querschnitt durch einen erfindungsgemäßen Raupenabzug 6 dargestellt, bei dem das extrudierte Rohr 8 von symmetrisch zueinander in X-Stellung angeordneten Raupenketten 10, 10' gefördert wird. Die Längsachse 12 der Abzugsvorrichtung, zu der die Raupenketten 10, 10' symmetrisch angeordnet sind, stimmt mit der Symmetrieachse des Rohres 8 überein. Die Anpresskraft wird von pneumatischen Zylindern 14 eingebracht und bewirkt ein Anpressen aller Raupenketten 10, 10' an die Wand des Rohres 8.

Bei einer Durchmesseränderung des extrudierten Rohres 8 werden die beiden oben gelegenen Raupenketten 10' gegen die von den Druckzylindern 14 aufgebrachte Anpresskraft ausgelenkt, so dass die Anordnung der oberhalb der durch die Horizontale und die Längsachse 12 definierten Ebene liegenden Raupenketten 10' und der unterhalb dieser Ebene liegenden 10 kurzfristig nicht mehr symmetrisch zur Maschinenlängsachse 12 ist. Die Symmetrieachse des Rohres 8 stimmt mehr mit der Längsachse 12 des Raupenabzugs überein. Dieser Zustand ist in Fig. 3 gezeigt. Durch - nicht dargestellte - Weggeber an den Zylindern 14 wird die Auslenkung der Raupenketten 10' festgestellt, gemessen und einer - nicht dargestellten - Steuerung übermittelt, die sofort den Abstand der unteren Raupenketten 10 von der Maschinenlängsachse 12 mit Hilfe eines Winkelgebers am Motor 18 so verändert, dass sich die in Fig. 4 dargestellte symmetrische Anordnung von Raupenketten 10, 10' und Maschinenlängsachse 12 wieder einstellt, die eine optimale Förderung des Rohres 8 bei minimaler Abnutzung der Raupenketten 10,10' gewährleistet.

Der Vorteil der vorliegenden Erfindung ist es, dass bei der Produktion von Extrusionsprodukten in Extrusionslinien auftretenden Querschnittsänderungen von dem Raupenabzug automatisch erkannt werden können und dieser sich selbsttätig auf eine neuerliche, optimale Passung regelt. Dies ermöglicht einen reibungsloseren Betrieb und es werden kostspielige Produktionsausfälle, die durch manuelle Anpassungen verursacht werden, vermieden.

### Bezugszeichenliste

- **1**: Extrusionslinie
- **2**: Extruder
- **3**: Rohrwerkzeug
- **4**: Vakuumtank
- **5**: Kühlvorrichtung
- **6**: Raupenabzug
- **7**: Trenneinrichtung
- **8**: Rohr
- **9**: Ablegeeinheit
- **10**: untere Raupenketten
- **10'**: obere Raupenketten
- **12**: Maschinenlängsachse
- **14**: Pneumatikzylinder
- **18**: Motor

## Patentansprüche

1. Verfahren zum Abziehen von Extrusionsprodukten, insbesondere von Kunststoffrohren, mittels eines Raupenabzugs (6), der mindestens zwei Raupenketten (10, 10') aufweist, wobei die Raupenketten mindestens während des Abziehens symmetrisch zu einer Längsachse (12) des Raupenabzugs anordenbar sind und ihr Abstand von dieser veränderbar ist, **dadurch gekennzeichnet, dass** eine Änderung des Querschnitts des Extrusionsprodukts (8) gemessen wird und in Abhängigkeit von dieser Änderung der Abstand der Raupenketten von einer Längsachse (12) des Raupenabzugs automatisch so angepasst wird, dass die Symmetrieachse des Extrusionsprodukts mit der Längsachse (12) des Raupenabzugs übereinstimmt.

2. Verfahren nach Anspruch 1, **dadurch gekennzeichnet, dass** bei einer Änderung des Querschnitts des Extrusionsprodukts die oberhalb einer horizontalen Ebene durch die Längsachse des Raupenabzugs angeordneten Raupenketten ausgelenkt werden und diese Auslenkung gemessen wird und die in bzw. unterhalb dieser Ebene liegenden Raupenketten entsprechend der gemessenen Auslenkung derart verfahren werden, dass die Symmetrieachse des Extrusionsprodukts mit der Längsachse des Raupenabzugs übereinstimmt.

3. Verfahren nach Anspruch 2, **dadurch gekennzeichnet, dass** die oberhalb der Ebene angeordneten Raupenketten von regelbaren, elastischen Mitteln gegen das Extrusionsprodukt gedrückt werden.

4. Verfahren nach einem der Ansprüche 1 bis 3, **dadurch gekennzeichnet, dass** die gemessene Auslenkung einer Steuerung zugeführt wird, die die notwendige Abstandsänderung errechnet und die Abstandsänderung veranlasst.

5. Verfahren zum Herstellen von Extrusionsprodukten, insbesondere von Kunststoffrohren, mittels Extrudieren eines Schmelzestrangs aus einem Extruder (2), Formen des Schmelzestrangs in einem Werkzeug (3), insbesondere in einem Rohrwerkzeug zu einem Schmelzeschlauch, Abkühlen (5) und Kalibrieren (4) des Extrusionsprodukts und Abziehen desselben mit einem Raupenabzug (6) mit mindestens zwei Raupenketten (10, 10'), sowie Trennen des Extrusionsprodukts in einzelne Stücke, **dadurch gekennzeichnet, dass** der Abstand der Raupenketten von einer Längsachse (12) des Raupenabzugs nach Maßgabe einer gemessenen Durchmesseränderung des Extrusionsprodukts in Abhängigkeit von dieser automatisch so eingestellt wird, dass die Symmetrieachse des Extrusionsprodukts mit der Längsachse (12) des Raupenabzugs übereinstimmt.

6. Raupenabzug zum Abziehen von Extrusionsprodukten, insbesondere von Kunststoffrohren (8), mit mindestens zwei Raupenketten (10, 10'), wobei die Raupenketten (10, 10') mindestens während des Abziehens symmetrisch zu einer Längsachse (12) des Raupenabzugs (6) anordenbar und an das Extrusionsprodukt andrückbar sind, sowie mit Mitteln zum Ändern des Abstands zwischen einer Anzahl von Raupenketten (10, 10') und der Längsachse (12) des Raupenabzugs (6), **dadurch gekennzeichnet, dass** Mittel vorgesehen sind, um Auslenkungen von Raupenketten (10, 10') orthogonal zur Längsachse (12) zu messen.

7. Raupenabzug nach Anspruch 6, **dadurch gekennzeichnet, dass** zum Andrücken der Raupenketten (10, 10') Kolbenzylindereinheiten vorgesehen sind, deren Kolbenstangen orthogonal zu der Längsachse (12) des Raupenabzugs (6) verfahrbar sind.

8. Raupenabzug nach Anspruch 7, **dadurch gekennzeichnet, dass** die Kolbenzylindereinheiten nur für die oberhalb einer horizontalen Ebene durch die Längsachse (12) angeordneten Raupenketten (10') vorgesehen sind.

9. Raupenabzug nach Anspruch 7 oder 8, **dadurch gekennzeichnet, dass** der Druck der Kolbenzylindereinheiten automatisch regelbar ist.

10. Raupenabzug nach einem der Ansprüche 7 bis 9, **dadurch gekennzeichnet, dass** Pneumatikzylinder (14) als Kolbenzylindereinheiten vorgesehen sind.

11. Raupenabzug nach einem der Ansprüche 7 oder 10, **dadurch gekennzeichnet, dass** zum Ändern des Abstands zwischen den nicht von den Kolbenzylindereinheiten verfahrbaren Raupenketten (10) und der Längsachse (12) mindestens ein Motor (18) vorgesehen ist.

12. Raupenabzug nach Anspruch 11, **dadurch gekennzeichnet, dass** der mindestens eine Motor (18) mit den in oder unterhalb der horizontalen Ebene liegenden Raupenketten (10) verbunden ist.

13. Raupenabzug nach Anspruch 11 oder 12, **dadurch gekennzeichnet, dass** nur ein Motor (18) vorgesehen ist, der über ein Getriebe die in oder unterhalb der horizontalen Ebene liegenden Raupenketten (10) verfährt.

14. Raupenabzug nach einem der Ansprüche 6 bis 13, **dadurch gekennzeichnet, dass** die Mittel zum Messen der Auslenkung Weggeber umfassen.

15. Raupenabzug nach einem der Ansprüche 6 bis 14, **dadurch gekennzeichnet, dass** die Mittel zum Messen der Auslenkung mindestens einen Winkelgeber umfassen.

16. Raupenabzug nach Anspruch 15, **dadurch gekennzeichnet, dass** an dem Motor (18) ein Winkelgeber zum Messen der Auslenkung der mit dem Motor (18) verbundenen Raupenketten (10) vorgesehen ist.

17. Raupenabzug nach einem der Ansprüche 14 bis 16, **dadurch gekennzeichnet, dass** an den Kolbenzylindereinheiten Weggeber vorgesehen sind.

18. Raupenabzug nach einem der Ansprüche 6 bis 17, **dadurch gekennzeichnet, dass** eine Steuerung für die Regelung des Abstands der Raupenketten (10,10') von der Längsachse (12) des Raupenabzugs (6) nach Maßgabe der von den Mitteln zum Messen der Auslenkung empfangenen Signale vorgesehen ist.

19. Raupenabzug nach einem der Ansprüche 6 bis 18, **dadurch gekennzeichnet, dass** Mittel zum manuellen Regeln des Abstands zwischen Raupenketten (10, 10') und Längsachse (12) des Raupenabzugs (6) vorgesehen sind.

## Claims

1. A method for taking off extrusion products, especially plastic pipes, by means of a caterpillar take-off unit (6) comprising at least two caterpillar tracks (10, 10') wherein the caterpillar tracks can be arranged symmetrically with respect to a longitudinal axis (12) of the caterpillar take-off unit at least during the take-off process and the distance from said unit can be varied, **characterised in that** a modification of the cross-section of the extrusion product (8) is measured and depending on this modification, the distance of the caterpillar tracks from a longitudinal axis (12) of the caterpillar take-off unit is automatically adapted so that the axis of symmetry of the extrusion product coincides with the longitudinal axis (12) of the caterpillar take-off unit.

2. The method according to claim 1, **characterised in that** in the event of a modification of the cross-section of the extrusion product, the caterpillar tracks arranged above a horizontal plane through the longitudinal axis of the caterpillar take-off unit are deflected and this deflection is measured and the caterpillar tracks located on or under this plane are moved in accordance with this measured deflection so that the axis of symmetry of the extrusion product coincides with the longitudinal axis of the caterpillar take-off unit.

3. The method according to claim 2, **characterised in that** the caterpillar tracks located above the plane are pressed against the extrusion product by controllable elastic means.

4. The method according to any one of claims 1 to 3, **characterised in that** the measured deflection is supplied to a control system which calculates the necessary change in distance and effects this change in distance.

5. A method for manufacturing extrusion products, especially plastic pipes, by extruding a melt strand from an extruder (2), forming the melt strand in a tool (3), especially in a pipe tool to form a melt hose, cooling (5) and calibrating (4) the extrusion product and taking off said product using a caterpillar take-off unit (6) comprising at least two caterpillar tracks (10, 10') and separating the extrusion product into individual pieces, **characterised in that** the distance of the caterpillar tracks from the longitudinal axis (12) of the take-off unit is automatically adjusted according to a measured modification in the diameter of the extrusion product depending thereon so that the axis of symmetry of the extrusion product coincides with the longitudinal axis (12) of the caterpillar take-off unit.

6. A caterpillar take-off unit for taking off extrusion products, especially plastic pipes (8), comprising at least two caterpillar tracks (10, 10') wherein the caterpillar tracks (10, 10') can be arranged symmetrically with respect to a longitudinal axis (12) of the caterpillar take-off unit (6) at least during the take-off process can be pressed on the extrusion product and means for modifying the distance between a number of caterpillar tracks (10, 10') and the longitudinal axis (12) of the caterpillar take-off unit (6), **characterised in that** means are provided for measuring deflections of caterpillar tracks (10, 10') orthogonally to the longitudinal axis (12).

7. The caterpillar take-off unit according to claim 6, **characterised in that** piston cylinder units are provided for pressing the caterpillar tracks (10, 10'), the piston rods thereof being movable orthogonal to the longitudinal axis (12) of the caterpillar take-off unit (6).

8. The caterpillar take-off unit according to claim 7, **characterised in that** the piston cylinder units are only provided for the caterpillar tracks (10') arranged above a horizontal plane through the longitudinal axis (12).

9. The caterpillar take-off unit according to claim 7 or 8, **characterised in that** the pressure of the piston cylinder units is automatically controllable.

10. The caterpillar take-off unit according to any one of claims 7 to 9, **characterised in that** pneumatic cylinders (14) are provided as piston cylinder units.

11. The caterpillar take-off unit according to any one of claims 7 or 10, **characterised in that** at least one motor (18) is provided for changing the distance between the caterpillar tracks (10) which are not movable by the piston cylinder units and the longitudinal axis (12).

12. The caterpillar take-off unit according to claim 11, **characterised in that** the at least one motor (18) is connected to the caterpillar tracks (10) located in or under the horizontal plane.

13. The caterpillar take-off unit according to claim 11 or 12, **characterised in that** only one motor (18) is provided which moves the caterpillar tracks (10) located in or under the horizontal plane by means of a gear unit.

14. The caterpillar take-off unit according to any one of claims 6 to 13, **characterised in that** the means for measuring the deflection comprise a displacement transducer.

15. The caterpillar take-off unit according to any one of claims 6 to 14, **characterised in that** the means for measuring the deflection comprise at least one angle transducer.

16. The caterpillar take-off unit according to claim 15, **characterised in that** an angle transducer is provided at the motor (18) for measuring the deflection of the caterpillar tracks (10) connected to the motor (18).

17. The caterpillar take-off unit according to any one of claims 14 to 16, **characterised in that** distance transducers are provided on the piston cylinder units.

18. The caterpillar take-off unit according to any one of claims 6 to 17, **characterised in that** a control system is provided for regulating the distance of the caterpillar tracks (10, 10') from the longitudinal axis (12) of the caterpillar take-off unit (6) according to the signals received by the means for measuring the deflection.

19. The caterpillar take-off unit according to any one of claims 6 to 18, **characterised in that** means are provided for manually regulating the distance between caterpillar tracks (10, 10') and the longitudinal axis (12) of the caterpillar take-off unit (6).

## Revendications

1. Procédé d'extraction de produits extrudés, notamment de tubes en matière plastique, au moyen d'un extracteur de cordons (6) présentant au moins deux chaînes de cordons, les chaînes de cordons pouvant être disposées, du moins pendant l'extraction, symétriquement par rapport à un axe longitudinal (12) de l'extracteur de cordons et leur distance par rapport à celui-ci pouvant être modifiée, **caractérisé en ce qu'**une modification de la section transversale du produit extrudé (8) est mesurée et qu'en fonction de cette modification, la distance entre les chaînes de cordons et un axe longitudinal (12) de l'extracteur de cordons est adaptée automatiquement de manière à ce que l'axe de symétrie du produit extrudé coïncide avec l'axe longitudinal (12) de l'extracteur de cordons.

2. Procédé selon la revendication 1, **caractérisé en ce qu'**en cas de modification de la section transversale du produit extrudé, les chaînes de cordons disposées au dessus d'un plan horizontal sont déviées par l'axe longitudinal de l'extracteur de cordons et que cette déviation est mesurée et que les chaînes de cordons se trouvant dans ou en dessous de ce plan sont déplacées en fonction de la déviation mesurée de manière à ce que l'axe de symétrie du produit extrudé coïncide avec l'axe longitudinal de l'extracteur de cordons.

3. Procédé selon la revendication 2, **caractérisé en ce que** les chaînes de cordons disposées au dessus du plan sont comprimées par des moyens élastiques réglables contre le produit extrudé.

4. Procédé selon une des revendications 1 à 3, **caractérisé en ce que** la déviation mesurée est communiquée à une commande qui calcule la modification nécessaire de distance et procède à la modification de distance.

5. Procédé de fabrication de produits d'extrusion, notamment de tubes en matière plastique, par extrusion d'une barre coulée hors d'une extrudeuse (2), formage de la barre de coulée dans un outil (3), notamment dans un outil tubulaire, pour obtenir un tube coulé, refroidissement (5) et calibrage (4) du produit extrudé et extraction de celui-ci au moyen d'un extracteur de cordons (6) comportant au moins deux chaînes de cordons (10, 10') ainsi que division du produit extrudé en morceaux distincts, **caractérisé en ce que** la distance entre les chaînes de cordons et un axe longitudinal (12) de l'extracteur de cordons est réglée automatiquement en fonction d'une modification mesurée du diamètre du produit extrudé en fonction de celui-ci, de manière à ce que l'axe de symétrie du produit extrudé coïncide avec l'axe longitudinal (12) de l'extracteur de cordons.

6. Extracteur de cordons pour extraire des produits extrudés, notamment des tubes en matière plastique (8), comportant au moins deux chaînes de cordons (10, 10') dans lequel les chaînes de cordons (10, 10') peuvent être disposées au moins pendant l'extraction symétriquement par rapport à un axe longitudinal (12) de l'extracteur de cordons (6) et peuvent être comprimées contre le produit extrudé, ainsi que des moyens de modification de la distance entre un certain nombre de chaînes de cordons (10, 10') et l'axe longitudinal (12) de l'extracteur de cordons (6), **caractérisé en ce qu'**il est prévu des moyens pour mesurer des déviations de chaînes de cordons (10, 10') orthogonalement par rapport à l'axe longitudinal (12).

7. Extracteur de cordons selon la revendication 6, **caractérisé en ce que**, pour compresser les chaînes de cordons (10, 10'), il est prévu des unités pistons-cylindres dont les tiges de piston sont déplaçables orthogonalement par rapport à l'axe longitudinal (12) de l'extracteur de cordons (6).

8. Extracteur de cordons selon la revendication 7, **caractérisé en ce que** les unités pistons-cylindres ne sont prévues que pour les chaînes de cordons (10') disposées au dessus d'un plan horizontal et déviées par l'axe longitudinal (12).

9. Extracteur de cordons selon la revendication 7 ou 8, **caractérisé en ce que** la pression des unités pistons-cylindres est réglable automatiquement.

10. Extracteur de cordons selon une des revendications 7 à 9, **caractérisé en ce qu'**il est prévu des vérins hydrauliques (14) comme unités pistons-cylindres.

11. Extracteur de cordons selon une des revendications 7 ou 10, **caractérisé en ce que**, pour modifier la distance entre les chaînes de cordons (10) non déplaçables par les unités pistons-cylindres et l'axe longitudinal (12), il est prévu au moins un moteur (18).

12. Extracteur de cordons selon la revendication 11, **caractérisé en ce que** l'au moins un moteur (18) est relié aux chaînes de cordons (10) se trouvant en dessous du plan horizontal.

13. Extracteur de cordons selon la revendication 11 ou 12, **caractérisé en ce qu'**il n'est prévu qu'un moteur (18) qui déplace par l'intermédiaire d'une transmission les chaînes de cordons (10) se trouvant en dessous du plan horizontal.

14. Extracteur de cordons selon une des revendications 6 à 13, **caractérisé en ce que** les moyens de mesure de la déviation comprennent des détecteurs de course.

15. Extracteur de cordons selon une des revendications 6 à 14, **caractérisé en ce que** les moyens de mesure de la déviation comprennent au moins un détecteur d'angle.

16. Extracteur de cordons selon la revendication 15, **caractérisé en ce qu'**il est prévu sur le moteur (18) un détecteur d'angle pour mesurer la déviation des chaînes de cordons (10) reliées au moteur (18).

17. Extracteur de cordons selon une des revendications 14 à 16, **caractérisé en ce qu'**il est prévu sur les unités pistons-cylindres des détecteurs de course.

18. Extracteur de cordons selon une des revendications 6 à 17, **caractérisé en ce qu'**il est prévu une commande pour réguler la distance entre les chaînes de cordons (10, 10') et l'axe longitudinal (12) de l'extracteur de cordons (6) en fonction des signaux reçus par les moyens de mesure de la déviation.

19. Extracteur de cordons selon une des revendications 6 à 18, **caractérisé en ce qu'**il est prévu des moyens de réglage manuel de la distance entre les chaînes de cordons (10, 10') et l'axe longitudinal (12) de l'extracteur de cordons (6).
